# EUROPÄISCHE PATENTANMELDUNG

(11) **EP 4 175 088 A1**
(43) Veröffentlichungstag der Anmeldung: **03.05.2023**
(21) Anmeldenummer: 22201134.8
(22) Anmeldetag: 12.10.2022
(51) Int. Cl.: H02G 5/02

(54) **RUNDE ISOLATORSCHEIBE UND STROMSCHIENENANORDNUNG FÜR GEWINKELTE VERBINDUNG VON STROMSCHIENENABSCHNITTEN**

(30) Priorität: 29.10.2021 DE 102021212257
(71) Anmelder: Siemens Aktiengesellschaft, 80333 München (DE)
(72) Erfinder: Escape, Carlos, 50825 Köln (DE); Althoff, Sebastian, 40789 Monheim am Rhein (DE); Wolff, Volker, 45219 Essen (DE)
(74) Vertreter: Siemens Patent Attorneys

(57) **Zusammenfassung**

Die Erfindung betrifft eine Isolatorscheibe (1) für eine Stromschienenanordnung (20), eine Stromschiene (10) und eine Stromschienenanordnung (20) mit einer solchen Isolatorscheibe (1) und mehreren solcher Stromschienen (10). Die Isolatorscheibe (1) verfügt über ein von einer ersten Seite (2) der Isolatorscheibe (1) zu einer zweiten Seite (3) der Isolatorscheibe (1) führendes Loch (4), das eine Mittelachse (5) aufweist. Ein Rand (6) der Isolatorscheibe (1) umgibt und verbindet dabei die erste (2) und die zweite Seite (3). Erfindungsgemäß besitzen die erste (2) und die zweite Seite (3) der Isolatorscheibe (1) einen kreisförmigen Umfang (7), wobei ein jeweiliger Kreismittelpunkt des jeweiligen kreisförmigen Umfangs (7) von erster (2) und zweiter Seite (3) auf der Mittelachse (5) des Lochs (4) angeordnet ist.

Die Stromschiene (10) besitzt an entgegengesetzten Enden der Stromschiene (10) angeordnete Anschlussköpfe (11). Dabei weist die Stromschiene (10) eine entlang einer Stromflussrichtung (13) der Stromschiene (10) ausgerichtete Längsachse (12), eine senkrecht auf die Längsachse (12) ausgerichtete Breitenrichtung (14) und eine senkrecht zu der Längsachse (12) und senkrecht zu der Breitenrichtung (14) ausgerichtete Dickenrichtung (15) auf. Erfindungsgemäß weist wenigstens ein erster Anschlusskopf (11) der beiden Anschlussköpfe (11) eine Kante (16) auf, die wenigstens abschnittsweise in einer von der Breitenrichtung (14) und der Längsachse (12) aufgespannten Ebene kreisbogenförmig um einen Kreismittelpunkt (17) ausgebildet ist.

## Beschreibung

### Technisches Gebiet

Die Erfindung betrifft eine Isolatorscheibe für eine Stromschienenanordnung, eine Stromschiene und eine Stromschienenanordnung mit einer solchen Isolatorscheibe und mehreren solcher Stromschienen.

### Technischer Hintergrund

Stromschienen werden in elektrischen Installationen verwendet, um Elektrizität von einem netzseitigen Anschluss an Verbraucher innerhalb der Installation zu verteilen und den Montageaufwand für eine freie Verkabelung zu vermeiden. Dabei können Stromschienen verschiedener vorkonfektionierter Längen verwendet zu werden, um die Verteilung an die örtlichen Gegebenheiten der Installation anzupassen. Stromschienenanordnungen zur Verteilung über längere Strecken können in Stromschienenabschnitte unterteilt werden, die jeweils durch einen Satz Stromschienen der für den jeweiligen Stromschienenabschnitt benötigten Länge überbrückt werden. An Verbindungspunkten zwischen den einzelnen Stromschienenabschnitten werden dann die Stromschienen der einzelnen Stromschienenabschnitte übereinandergelegt, so dass die Stromschienen der benachbarten Stromschienenabschnitte miteinander elektrisch in Kontakt kommen. Um unterschiedliche Stromstärken zu verteilen, können mehrere Stromschienen hintereinander montiert und elektrisch parallelgeschaltet werden. Zwischen den Stromschienen können dabei an den Verbindungspunkten Isolatorscheiben eingesetzt werden, was einerseits der besseren Kühlung aufgrund der Beabstandung der Stromschienen voneinander und andererseits der elektrischen Isolation zwischen auf unterschiedlichen elektrischen Phasen oder Potentialen liegenden Stromschienen dient.

In vielen elektrischen Installationen wird eine Stromschiene oder Stromschienenanordnung als Sammelschiene waagerecht geführt, von der Zu- und Abgänge senkrecht nach unten abzweigen. Die Zu- und Abgänge werden dabei an Verbindungspunkten der als Sammelschiene dienenden Stromschiene oder Stromschienenanordnung mit dieser elektrisch verbunden. Hierbei werden üblicherweise ausschließlich rechtwinklige Verbindungen vorgesehen. Soll ein abweichender Winkel realisiert werden, werden die Stromschienen unter einem Winkel geschnitten und zusammengeschweißt, was entsprechend einen hohen Montageaufwand bedeutet und den Vorteil einer Stromschienenanordnung gegenüber einer freien Verkabelung mindestens teilweise zunichtemacht.

Es besteht somit Bedarf an Stromschienenanordnungen, die eine gewinkelte Führung der Stromschienen mit von rechten Winkeln abweichenden Winkeln erlauben.

Es ist daher Aufgabe der Erfindung, eine verbesserte Stromschienenanordnung einzuführen.

### Zusammenfassung der Erfindung

Ein erster Erfindungsaspekt führt daher eine Isolatorscheibe für eine Stromschienenanordnung ein. Die Isolatorscheibe verfügt über ein von einer ersten Seite der Isolatorscheibe, die sich entlang einer ersten Haupterstreckungsebene erstreckt, zu einer zweiten Seite der Isolatorscheibe, welche sich entlang einer zu der ersten Haupterstreckungsebene parallelen zweiten Haupterstreckungsebene erstreckt, führendes Loch, das eine senkrecht zu der ersten und der zweiten Haupterstreckungsebene verlaufende Mittelachse aufweist. Ein Rand der Isolatorscheibe umgibt und verbindet dabei die erste und die zweite Seite. Erfindungsgemäß besitzen die erste und die zweite Seite der Isolatorscheibe einen kreisförmigen Umfang, wobei ein jeweiliger Kreismittelpunkt des jeweiligen kreisförmigen Umfangs von erster und zweiter Seite auf der Mittelachse des Lochs angeordnet ist.

Die erfindungsgemäße Isolatorscheibe kann zwischen Stromschienen angeordnet werden und diese elektrisch voneinander isolieren. Der kreisförmige Umfang von erster und zweiter Seite (üblicherweise besitzen beide Seiten gleiche Umfänge beziehungsweise Radien) ermöglicht es, Isolierabstände zwischen den Stromschienen unabhängig von dem Winkel zwischen zwei Stromschienenabschnitten einzuhalten, da hierdurch die Wegstrecken von einer Kante der Stromschiene zum Rand der Isolatorscheibe für alle möglichen Anordnungen gleichbleiben. Die Isolatorscheibe kann insbesondere als zylindersymmetrischer Rotationskörper um die Mittelachse des Lochs ausgebildet sein.

Bei bevorzugten Ausführungsformen der Erfindung kann auf wenigstens einer Seite von erster oder zweiter Seite ein sich um das Loch herum erstreckender Kragen angeordnet sein, welcher sich parallel zu der Mittelachse des Lochs über die Haupterstreckungsebene der wenigstens einen Seite von erster oder zweiter Seite hinaus erstreckt. Dieser Kragen kann in eine Durchführung oder eine Ausnehmung einer Stromschiene eingeführt werden, so dass ein durch das Loch oder die Ausnehmung der Isolatorscheibe geführter Klemmbolzen elektrisch von der Stromschiene isoliert ist. Dadurch wird vermieden, dass der Klemmbolzen Stromschienen unterschiedlicher Phasen oder Potentiale miteinander kurzschließt.

Vorzugsweise ist ein zwischen der ersten und der zweiten Erstreckungsebene angeordneter und zu der ersten und der zweiten Erstreckungsebene parallel ausgerichteter äußerster Umfang des Randes größer als der kreisförmige Umfang der ersten und der zweiten Seite. Dadurch wird die Kriechstrecke zwischen auf der ersten Seite (beispielsweise Vorderseite) und der zweiten Seite (beispielsweise Rückseite) der Isolatorscheibe angeordneten Stromschienen vorteilhaft verlängert.

Ein zweiter Aspekt der Erfindung betrifft eine Stromschiene mit an entgegengesetzten Enden der Stromschiene angeordneten Anschlussköpfen. Dabei weist die Stromschiene eine entlang einer Stromflussrichtung der Stromschiene ausgerichtete Längsachse, eine senkrecht auf die Längsachse ausgerichtete Breitenrichtung und eine senkrecht zu der Längsachse und senkrecht zu der Breitenrichtung ausgerichtete Dickenrichtung auf. Eine Breite der Stromschiene entlang der Breitenrichtung ist wenigstens doppelt so groß wie eine Dicke der Stromschiene entlang der Dickenrichtung. Erfindungsgemäß weist wenigstens ein erster Anschlusskopf der beiden Anschlussköpfe eine Kante auf, die wenigstens abschnittsweise in einer von der Breitenrichtung und der Längsachse aufgespannten Ebene kreisbogenförmig um einen Kreismittelpunkt ausgebildet ist.

Die wenigstens abschnittsweise kreisbogenförmig ausgebildete Kante des Anschlusskopfes folgt der Form der Seiten der Isolatorscheibe des ersten Erfindungsaspektes, die kreisförmige Umfänge besitzen, wodurch ein Zusammenwirken von Isolatorscheibe und Stromschiene in einer Stromschienenanordnung ermöglicht wird.

Besonders bevorzugt weist wenigstens der erste Anschlusskopf eine entlang der Dickenrichtung um den Kreismittelpunkt herum angeordnete Durchführung auf. Die Durchführung kann in einer Linie mit dem Loch der Isolatorscheibe angeordnet werden und so Raum für ein Befestigungsmittel wie einen Klemmbolzen bieten, der Stromschienen und Isolatorscheibe(n) zu einem festen Verbund verbindet.

Ein zweiter Anschlusskopf der beiden Anschlussköpfe der erfindungsgemäßen Stromschiene kann eine den Kreismittelpunkt umgebende und sich in der Breitenrichtung bis zu einer Seite des zweiten Anschlusskopfes erstreckende Ausnehmung aufweisen, die zu der Seite des zweiten Anschlusskopfes offen ist.

Eine derartige Stromschiene kann über einen Klemmbolzen der beschriebenen Art geführt werden, ohne dass der Klemmbolzen vollständig gelöst und entfernt werden müsste, so dass die Anzahl von Stromschienen oder das Anbringen von zusätzlich Zu- und Abgängen von einer als Sammelschiene vorgesehenen Stromschienenanordnung vereinfacht wird.

Ein dritter Aspekt der Erfindung betrifft eine Stromschienenanordnung, die wenigstens eine Isolatorscheibe gemäß dem ersten Erfindungsaspekt, wenigstens einen ersten Stromschienenabschnitt und einen zweiten Stromschienenabschnitt aufweist. Dabei weisen der erste Stromschienenabschnitt und der zweite Stromschienenabschnitt jeweils eine Mehrzahl von Stromschienen gemäß dem zweiten Erfindungsaspekt auf. Jeweils eine Stromschiene des ersten Stromschienenabschnitts und eine Stromschiene des zweiten Stromschienenabschnitts liegen dabei an ihren jeweiligen Anschlussköpfen entlang der Dickenrichtung unter Bildung eines elektrischen Kontaktes aufeinander auf und bilden ein Stromschienenpaar einer Mehrzahl von Stromschienenpaaren. Die wenigstens eine Isolatorscheibe ist zwischen benachbarten Stromschienenpaaren angeordnet.

Besonders bevorzugt besitzen die wenigstens abschnittsweise kreisbogenförmige Kante wenigstens des ersten Anschlusskopfes der Stromschiene und die kreisförmigen Umfänge der ersten Seite und der zweiten Seite der Isolatorscheibe gleiche Radien. Eine Breite der Stromschienen ist besonders bevorzugt gleich einem Durchmesser der kreisförmigen Umfänge der ersten Seite und der zweiten Seite der Isolatorscheibe. Dadurch können die Stromschienen und die Isolatorscheibe einander passgenau überlagert werden. Wird die Isolatorscheibe mit einem Kragen auf einer Seite ausgeführt, entspricht eine Dicke der Stromschienen vorzugsweise einer halben Höhe des Kragens. In diesem Fall können beide Stromschienen eines Stromschienenpaares auf denselben Kragen der Isolatorscheibe aufgesetzt und beide Stromschienen so elektrisch von einem durch die Isolatorscheibe geführten Klemmbolzen isoliert werden. Wird die Isolatorscheibe mit jeweils einem Kragen auf jeder Seite der Isolatorscheibe ausgeführt, kann hingegen die Höhe der Kragen jeweils der Dicke einer Stromschiene entsprechen. In diesem Fall werden die Stromschienen eines Stromschienenpaares durch jeweilige Kragen zweier einander an den Kragen berührender Isolatorscheiben von dem Klemmbolzen isoliert.

Bei bevorzugten erfindungsgemäßen Stromschienenanordnung sind die Mehrzahl von Stromschienen mit einer Durchführung und/oder einer Ausnehmung ausgeführt. Die Stromschienenanordnung weist dabei ferner einen durch das Loch der wenigstens einen Isolierscheibe und die Durchführung oder die Ausnehmung geführten Klemmbolzen auf, welcher ausgebildet ist, die Stromschienenanordnung entlang der Dickenrichtung zu klemmen.

Insbesondere können bei der erfindungsgemäßen Stromschienenanordnung die Längsachsen der Stromschienen eines jeweiligen Stromschienenpaares einen von 90 und 180 Grad verschiedenen Winkel bilden und eine Ebene aufspannen, deren Flächennormale parallel zu der Dickenrichtung ist.

### Kurzbeschreibung der Figuren

Die Erfindung wird nachfolgend anhand von Abbildungen von Ausführungsbeispielen näher erläutert. Es zeigen:
Figur 1 eine Draufsicht eines Ausführungsbeispiels einer erfindungsgemäßen Isolatorscheibe;
Figur 2 eine Seitenansicht des Ausführungsbeispiel der erfindungsgemäßen Isolatorscheibe von Figur 1;
Figur 3 eine Teilansicht eines ersten Ausführungsbeispiels einer erfindungsgemäßen Stromschiene;
Figur 4 eine Teilansicht eines zweiten Ausführungsbeispiels einer erfindungsgemäßen Stromschiene;
Figur 5 eine Teilansicht eines ersten Ausführungsbeispiels einer erfindungsgemäßen Stromschienenanordnung;
Figur 6 eine Teilansicht eines zweiten Ausführungsbeispiels einer erfindungsgemäßen Stromschienenanordnung; und
Figur 7 eine Teilansicht eines dritten Ausführungsbeispiels einer erfindungsgemäßen Stromschienenanordnung.

### Ausführliche Figurenbeschreibung

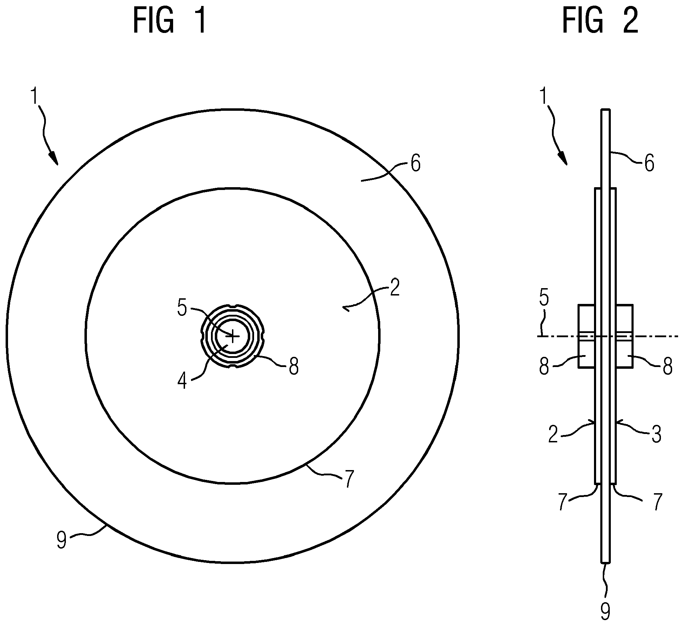

Figur 1 zeigt eine Draufsicht eines Ausführungsbeispiels einer erfindungsgemäßen Isolatorscheibe 1. Die Isolatorscheibe 1 wird in Figur 1 mit Sicht auf eine erste Seite 2 dargestellt, auf der nicht zu sehenden Rückseite der Isolatorscheibe 1 von Figur 1 befindet sich eine zweite Seite 3.

Die erste Seite 2 und die zweite Seite 3 besitzen kreisförmige Umfänge 7, wobei vorliegend die Radien beziehungsweise Durchmesser der kreisförmigen Umfänge 7 der beiden Seiten 2, 3 gleich groß sind. Die Isolatorscheibe 1 weist außerdem einen Rand 6 auf, der die erste Seite 2 und die zweite Seite 3 miteinander verbindet. Der Rand 6 ist vorliegend ebenfalls kreisförmig ausgebildet und besitzt einen äußersten Umfang 9, der größer als die kreisförmigen Umfänge 7 ist. Diese Formgebung des Randes 6 bewirkt eine Verlängerung von Kriechstrecken zwischen der ersten Seite 2 und der zweiten Seite 3 der Isolatorscheibe 1.

In der Mitte der Isolatorscheibe 1 ist ein Loch 4 vorgesehen, das von der ersten Seite 2 zur zweiten Seite 3 durch die Isolatorscheibe 1 hindurch führt. Die Isolatorscheibe 1 besitzt eine Mittelachse 5, die durch das Loch 4 hindurch verläuft und auf der die jeweiligen Kreismittelpunkte der kreisförmigen Umfänge 7 der ersten Seite 2 und der zweiten Seite 3 liegen.

Um das Loch 4 herum sind auf beiden Seiten 2, 3 der Isolatorscheibe 1 jeweilige Kragen 8 vorgesehen, die sich über jeweilige Haupterstreckungsebenen der jeweiligen Seite 2, 3 hinaus erheben. Die Kragen 8 verlängern ein zylindrisches Volumen des Loches 4 und ermöglichen es, ein durch das Loch 4 geführtes Befestigungselement wie beispielsweise einen Klemmbolzen elektrisch von auf der ersten und zweiten Seite 2, 3 der Isolatorscheibe 1 angeordneten Stromschienen zu isolieren, wodurch das Befestigungselement durch eine oder mehrere Stromschienen hindurchgeführt werden kann, ohne diese miteinander kurzzuschließen.

Die Isolatorscheibe 1 von Figur 1 ist als zylindersymmetrischer Rotationskörper ausgeführt, was eine bevorzugte Ausführungsvariante darstellt.

Figur 2 zeigt eine Seitenansicht des Ausführungsbeispiel der erfindungsgemäßen Isolatorscheibe 1 von Figur 1. Wie zu erkennen ist, ist das Ausführungsbeispiel der erfindungsgemäßen Isolatorscheibe 1 gemäß einer Querschnittsebene symmetrisch geformt, so dass die erste Seite 2 und die zweite Seite 3 sich von der Formgebung nicht unterscheiden.

Die Isolatorscheiben 1 der Erfindung können aus einem keramischen Werkstoff hergestellt werden, allerdings werden für die hier im Zentrum des Interesses stehenden Niederspannungsanwendungen (Spannungen unter 1000 Volt) Kunststoffe wegen ihrer Elastizität und der geringeren Kosten bevorzugt.

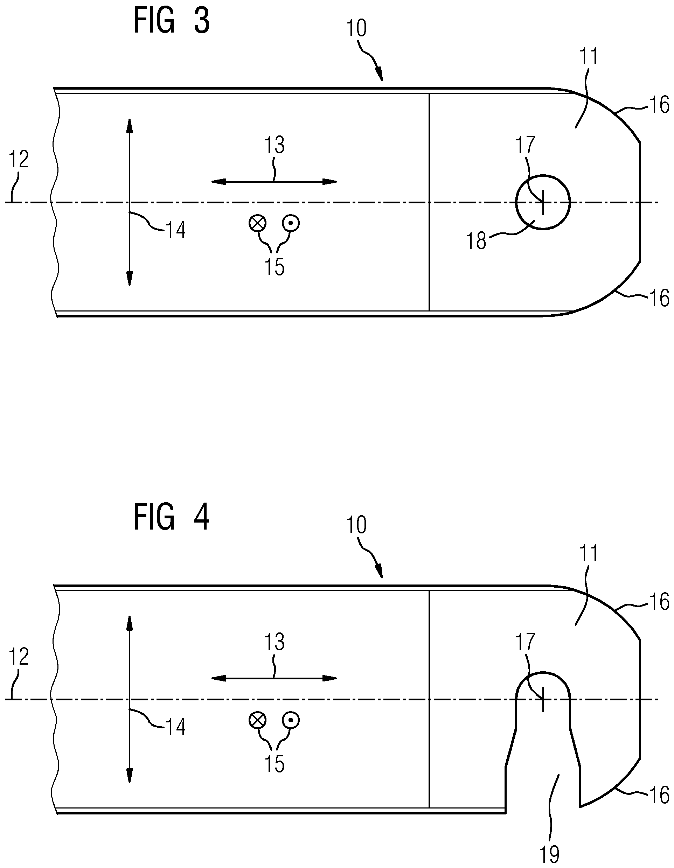

Figur 3 zeigt eine Teilansicht eines ersten Ausführungsbeispiels einer erfindungsgemäßen Stromschiene 10. Stromschienen besitzen allgemein eine längliche und flache Form, so dass eine Länge der Stromschiene entlang einer Stromflussrichtung 13 deutlich größer als eine Breite der Stromschiene in einer Breitenrichtung 14 ist. Die Breite der Stromschiene ist wiederum üblicherweise größer als eine Dicke entlang einer in die Figur 3 hinein oder daraus hinaus weisenden Dickenrichtung 15.

Die Stromschiene 10 besitzt eine Längsachse 12, die entlang oder parallel der Stromflussrichtung 13 verläuft. An den entgegengesetzten Enden der Stromschiene 10 sind Anschlussköpfe 11 vorgesehen, die zur Montage und Verbindung der Stromschiene 10 mit weiteren Stromschienen oder anderen Zu- und Abgängen dienen. Erfindungswesentlich weist eine Kante 16 wenigstens eines Anschlusskopfes 11 der Stromschiene 10 aus der Draufsicht entlang der Dickenrichtung 15 wenigstens abschnittsweise einen kreisbogenförmigen Verlauf auf. Im gezeigten Ausführungsbeispiel besitzen die kreisbogenförmigen Abschnitte der Kante 16 einen gemeinsamen Kreismittelpunkt 17, der zudem auch den Mittelpunkt einer Durchführung 18 im Zentrum des Anschlusskopfes 11 bildet.

Eine Isolatorscheibe 1, wie in den Figuren 1 und 2 gezeigt, kann auf und/oder hinter die Stromschiene 10 gelegt werden, wobei der Kragen 8 - sofern vorhanden - in die Durchführung 18 eingeführt werden kann. Dadurch können mehrere Stromschienen 10 beabstandet und elektrisch isoliert voneinander hintereinander angeordnet werden.

Durch die Durchführung 18 und die axial davor und/oder dahinter angeordneten Löcher 4 der Isolatorscheibe(n) 1 kann ein Befestigungsmittel wie ein Klemmbolzen geführt werden, das elektrisch von den Stromschienen 10 isoliert ist und die Stromschienen 10 und die Isolatorscheibe(n) 1 kraftschlüssig miteinander verbindet und dadurch fixiert.

Die Formgebung der ersten und zweiten Seite 2, 3 der Isolatorscheibe 1 und der wenigstens abschnittsweise kreisbogenförmigen Kante 16 des Anschlusskopfes 11 der Stromschiene 10 sind vorzugsweise in ihrer Formgebung wie hinsichtlich ihrer Radien aufeinander abgestimmt. Insbesondere können die Radien gleich sein.

Durch Übereinanderlegen zweier Stromschienen 10 an deren Anschlussköpfen 11 ohne zwischen den Stromschienen 10 angeordnete Isolatorscheibe 1 kann eine elektrische Kontaktierung erreicht werden, so dass die Stromschienen 10 als Stromschienenabschnitte einer über eine größere Strecke reichenden Stromschienenanordnung dienen können. Die runde Formgebung der Kante 16 und der Isolatorscheibe 1 ermöglicht dabei eine freie Wahl eines Winkels der Stromschienenabschnitte zueinander, ohne dass Isolationsabstände und Kriechstrecken verändert würden. Um einen Übergangswiderstand zwischen den Anschlussköpfen 11 der miteinander elektrisch verbundenen Stromschienen 10 zu reduzieren, können die Anschlussköpfe 11 mit einem Edelmetall oder auch einer gegen Oxidation resistenten Legierung beschichtet sein. Der Körper der Stromschienen 10 kann dann mit einem preisgünstigen Metall wie beispielsweise Aluminium hergestellt werden. Der Körper der Stromschienen 10 kann außerhalb der Anschlussköpfe 11 mit einer Beschichtung, Isolationsschicht, Passivierung oder auch einer Lackierung versehen sein.

Figur 4 zeigt eine Teilansicht eines zweiten Ausführungsbeispiels einer erfindungsgemäßen Stromschiene 10 mit einer alternativen Formgebung des Anschlusskopfes 11. Eine erfindungsgemäße Stromschiene 10 kann an ihren beiden Enden Anschlussköpfe 11 mit (spiegelbildlich) gleichen oder unterschiedlichen Formgebungen aufweisen. Beispielsweise kann ein Anschlusskopf 11 wie in Figur 3 gezeigt und der andere Anschlusskopf 11 wie in Figur 4 gezeigt ausgebildet sein. Es können aber auch beide Anschlussköpfe 11 der Stromschiene 10 wie in Figur 3 gezeigt oder beide Anschlussköpfe 11 wie in Figur 4 gezeigt ausgebildet sein.

Der Anschlusskopf 11 des zweiten Ausführungsbeispiels der erfindungsgemäßen Stromschiene 10 unterscheidet sich von dem ersten Ausführungsbeispiel der Figur 3 durch eine Ausnehmung 19, die zum Rand der Stromschiene 10 hin geöffnet ist und von dort bis über den Kreismittelpunkt 17 der wenigstens abschnittsweise kreisbogenförmigen Kante 16 reicht. Die Ausnehmung bietet so den für ein Befestigungsmittel und gegebenenfalls den Kragen 8 der Isolatorscheibe 1 benötigten Raum, erlaubt aber auch, die Stromschiene 10 nachträglich auf das Befestigungsmittel aufzustecken oder von diesem abzunehmen, ohne das Befestigungsmittel vorher (vollständig) zu lösen oder zu entfernen. Dadurch muss eine restliche Stromschienenanordnung nicht demontiert werden, was die Montage erleichtert und eine nachträgliche Erweiterung einer bestehenden Stromschienenanordnung für höhere Stromstärken durch weitere Stromschienen erlaubt.

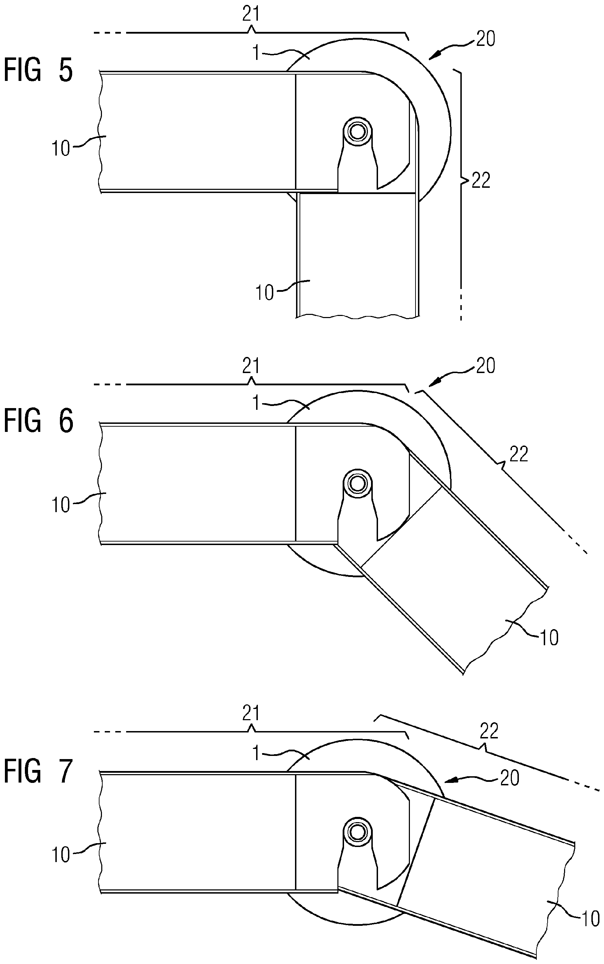

Die Figuren 5, 6 und 7 zeigen Teilansichten von Ausführungsbeispielen einer erfindungsgemäßen Stromschienenanordnung 20. Die Stromschienenanordnungen 20 unterteilen sich in wenigstens einen ersten Stromschienenabschnitt 21 und einen zweiten Stromschienenabschnitt 22, die durch jeweilige Stromschienen 10 gebildet werden und jeweils nur teilweise dargestellt sind. Die Stromschienenabschnitte 21, 22 sind elektrisch und mechanisch unter Verwendung einer Isolatorscheibe 1 und eines Befestigungsmittels (beispielsweise eines Klemmbolzens; nicht dargestellt) miteinander verbunden. Ein Winkel zwischen den Stromschienenabschnitten beziehungsweise deren Längsachsen ist dabei erfindungsgemäß frei wählbar.

Bei den Ausführungsbeispielen der Figuren 5, 6 und 7 weist die Stromschiene 10 des ersten Stromschienenabschnittes 21 einen gemäß Figur 4 ausgebildeten Anschlusskopf und die Stromschiene 10 des zweiten Stromschienenabschnittes 22 einen gemäß Figur 3 ausgebildeten Anschlusskopf auf. Dies ist vorteilhaft, da bei Verwendung zweier Anschlussköpfe mit einer Ausnehmung 19 bei einem Winkel nahe 180 Grad die elektrische Kontaktfläche zwischen den beiden Stromschienenabschnitten 21, 22 ungünstig reduziert würde.

Die erfindungsgemäße Isolatorscheibe und die erfindungsgemäßen Stromschienen erlauben die Ausbildung von Stromschienenanordnungen, bei denen ein Winkel zwischen Stromschienenabschnitten nicht nur frei gewählt werden kann, sondern die auch tolerant gegenüber Längenänderungen der Stromschienen aufgrund von Wärmeausdehnung sind. Solche Längenänderungen können einen gegebenen Winkel verändern, was jedoch vorliegend erfindungsgemäß gegenüber entsprechenden Anordnungen des Standes der Technik möglich ist, ohne die Anordnung unter unerwünscht hohen mechanischen Stress zu setzen.

Die Erfindung wurde anhand von Ausführungsbeispielen näher erläutert. Die Beispiele dienen dabei dem besseren Verständnis und sollen die Erfindung, die ausschließlich durch die nachfolgenden Patentansprüche definiert wird, nicht beschränken.

### Bezugszeichenliste

- 1: Isolatorscheibe
- 2: erste Seite
- 3: zweite Seite
- 4: Loch
- 5: Mittelachse
- 6: Rand
- 7: kreisförmiger Umfang
- 8: Kragen
- 9: äußerster Umfang
- 10: Stromschiene
- 11: Anschlusskopf
- 12: Längsachse
- 13: Stromflussrichtung
- 14: Breitenrichtung
- 15: Dickenrichtung
- 16: kreisbogenförmige Kante
- 17: Kreismittelpunkt
- 18: Durchführung
- 19: Ausnehmung
- 20: Stromschienenanordnung
- 21: erster Stromschienenabschnitt
- 22: zweiter Stromschienenabschnitt

## Patentansprüche

1. Eine Isolatorscheibe (1) für eine Stromschienenanordnung (20) mit einem von einer ersten Seite (2) der Isolatorscheibe (1), die sich entlang einer ersten Haupterstreckungsebene erstreckt, zu einer zweiten Seite (3) der Isolatorscheibe (1), welche sich entlang einer zu der ersten Haupterstreckungsebene parallelen zweiten Haupterstreckungsebene erstreckt, führenden Loch (4), das eine senkrecht zu der ersten und der zweiten Haupterstreckungsebene verlaufende Mittelachse (5) aufweist, und einem die erste (2) und die zweite Seite (3) umgebenden und verbindenden Rand (6), **dadurch geke nnzeichnet**, dass die erste (2) und die zweite Seite (3) der Isolatorscheibe (1) einen kreisförmigen Umfang (7) besitzen und dass ein jeweiliger Kreismittelpunkt (17) des jeweiligen kreisförmigen Umfangs (7) von erster (2) und zweiter Seite (3) auf der Mittelachse (5) des Lochs (4) angeordnet ist.

2. Die Isolatorscheibe (1) des vorhergehenden Anspruchs, bei dem die Isolatorscheibe (1) als zylindersymmetrischer Rotationskörper um die Mittelachse (5) des Lochs (4) ausgebildet ist.

3. Die Isolatorscheibe (1) eines der vorhergehenden Ansprüche, bei der auf wenigstens einer Seite (2, 3) von erster (2) oder zweiter Seite (3) ein sich um das Loch (4) herum erstreckender Kragen (8) angeordnet ist, welcher sich parallel zu der Mittelachse (5) des Lochs (4) über die Haupterstreckungsebene der wenigstens einen Seite (2, 3) von erster (2) oder zweiter Seite (3) hinaus erstreckt.

4. Die Isolatorscheibe (1) eines der vorhergehenden Ansprüche, bei der ein zwischen der ersten und der zweiten Erstreckungsebene angeordneter und zu der ersten und der zweiten Erstreckungsebene parallel ausgerichteter äußerster Umfang (9) des Randes (6) größer ist als der kreisförmige Umfang (7) der ersten (2) und der zweiten Seite (3).

5. Eine Stromschiene (10) mit an entgegengesetzten Enden der Stromschiene (10) angeordneten Anschlussköpfen (11), wobei die Stromschiene (10) eine entlang einer Stromflussrichtung (13) der Stromschiene (10) ausgerichtete Längsachse (12), eine senkrecht auf die Längsachse (12) ausgerichtete Breitenrichtung (14) und eine senkrecht zu der Längsachse (12) und senkrecht zu der Breitenrichtung (14) ausgerichtete Dickenrichtung (15) aufweist und eine Breite der Stromschiene (10) entlang der Breitenrichtung (14) wenigstens doppelt so groß ist wie eine Dicke der Stromschiene (10) entlang der Dickenrichtung (15), **dadurch gekennzeichnet, dass** wenigstens ein erster Anschlusskopf (11) der beiden Anschlussköpfe (11) eine Kante (16) aufweist, die wenigstens abschnittsweise in einer von der Breitenrichtung (14) und der Längsachse (12) aufgespannten Ebene kreisbogenförmig um einen Kreismittelpunkt (17) ausgebildet ist.

6. Die Stromschiene (10) des vorhergehenden Anspruchs, bei der wenigstens der erste Anschlusskopf (11) eine entlang der Dickenrichtung (15) um den Kreismittelpunkt (17) herum angeordnete Durchführung (18) aufweist.

7. Die Stromschiene (10) gemäß einem der beiden vorhergehenden Ansprüche, bei der ein zweiter Anschlusskopf (11) der beiden Anschlussköpfe (11) eine den Kreismittelpunkt (17) umgebende und sich in der Breitenrichtung (14) bis zu einer Seite des zweiten Anschlusskopfes (11) erstreckende Ausnehmung (19) aufweist, die zu der Seite des zweiten Anschlusskopfes (11) offen ist.

8. Eine Stromschienenanordnung (20) mit wenigstens einer Isolatorscheibe (1) gemäß einem der Ansprüche 1 bis 4, wenigstens einem ersten Stromschienenabschnitt (21) und einem zweiten Stromschienenabschnitt (22), wobei der erste Stromschienenabschnitt (21) und der zweite Stromschienenabschnitt (22) jeweils eine Mehrzahl von Stromschienen (10) gemäß einem der Ansprüche 5 bis 7 aufweisen, wobei jeweils eine Stromschiene (10) des ersten Stromschienenabschnitts (21) und eine Stromschiene (10) des zweiten Stromschienenabschnitts (22) an ihren jeweiligen Anschlussköpfen (11) entlang der Dickenrichtung (15) unter Bildung eines elektrischen Kontaktes aufeinander aufliegen und ein Stromschienenpaar einer Mehrzahl von Stromschienenpaaren bilden, und wobei die wenigstens eine Isolatorscheibe (1) zwischen benachbarten Stromschienenpaaren angeordnet ist.

9. Die Stromschienenanordnung (20) des vorhergehenden Anspruchs, bei der die wenigstens abschnittsweise kreisbogenförmige Kante (16) wenigstens des ersten Anschlusskopfes (11) der Stromschiene (10) und die kreisförmigen Umfänge (7) der ersten Seite (2) und der zweiten Seite (3) der Isolatorscheibe (1) gleiche Radien besitzen.

10. Die Stromschienenanordnung (20) gemäß einem der beiden vorhergehenden Ansprüche, bei der die Mehrzahl von Stromschienen (10) nach wenigstens einem der Ansprüche 6 oder 7 ausgeführt sind und mit einem durch das Loch (4) der wenigstens einen Isolierscheibe (1) und die Durchführung (18) oder die Ausnehmung (19) geführten Klemmbolzen, welcher ausgebildet ist, die Stromschienenanordnung (20) entlang der Dickenrichtung (15) zu klemmen.

11. Die Stromschienenanordnung (20) gemäß einem der Ansprüche 8 bis 10, bei der die Längsachsen (12) der Stromschienen (10) eines jeweiligen Stromschienenpaares einen von 90 und 180 Grad verschiedenen Winkel bilden und eine Ebene aufspannen, deren Flächennormale parallel zu der Dickenrichtung (15) ist.
